# EUROPEAN PATENT APPLICATION

(11) **EP 4 668 944 A1**
(43) Date of publication of application: **24.12.2025**
(21) Application number: 23921910.8
(22) Date of filing: 16.02.2023
(51) Int. Cl.: H04W 72/0446

(54) **COMMUNICATION PROCESSING METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2023/076614
(87) International publication number: WO 2024/168756

(57) **Abstract**

The present disclosure relates to the technical field of communications, and provides a communication processing method and apparatus. The method comprises: when a first data packet does not meet a condition for using a shared COT, a terminal device executing LBT of a first type, wherein the first data packet is a data packet obtained by means of LCP processing. By applying the technical solution of the present disclosure, for sidelink communication, when the data packet obtained by means of LCP processing does not meet the condition for using the shared COT, the specific processing solution of the terminal device is provided, and the specific processing behavior of the terminal device is defined, thereby meeting service requirements.

## Description

### TECHNICAL FIELD

The present disclosure relates to the field of communication technologies, and particularly to a communication processing method and apparatus.

### BACKGROUND

To facilitate direct communication between terminals, a sidelink (SL) communication mode is introduced.

Currently, for the SL communication, in a case that the terminal completes logical channel prioritization (LCP) processing and a corresponding data packet that been assembled does not meet a usage condition of a shared channel occupancy time (COT), a specific processing behavior of the terminal needs to be determined. However, at present, such a communication processing solution is still lacking.

### SUMMARY

The present disclosure proposes a communication processing method and apparatus. For SL communication, in a case that a data packet obtained through LCP processing does not meet a usage condition of a shared COT, the present disclosure provides a specific processing solution for a terminal, clarifying a specific processing behavior of the terminal to meet a service requirement.

In a first aspect of the present disclosure, there is provided a communication processing method. The method is performed by a user equipment (UE), and includes: in a case that a first data packet does not meet a condition for using a shared channel occupancy time (COT), performing, by the UE, listen before talk (LBT) of a first type, in which the first data packet is a data packet obtained through logical channel prioritization (LCP) processing.

In some embodiments of the present disclosure, the UE is a responding UE of the shared COT.

In some embodiments of the present disclosure, the first data packet not meeting the condition for using the shared COT includes at least one of:
a channel access priority class (CAPC) of the first data packet being greater than a CAPC indicated by shared COT indication information; or
a target UE for receiving the first data packet being not an initiating UE of the shared COT.

In some embodiments of the present disclosure, the method further includes: determining whether the UE is a responding UE of the shared COT based on a target address and a service type indicated by sidelink control information (SCI) carrying shared COT indication information.

In some embodiments of the present disclosure, determining whether the UE is the responding UE of the shared COT based on the target address and the service type indicated by the SCI carrying the shared COT indication information includes: determining that the UE is the responding UE of the shared COT, in a case that the service type is a unicast service, and the target address indicated by the SCI carrying the shared COT indication information is an address of the UE; or determining that the UE is the responding UE of the shared COT, in a case that the service type is a groupcast service, the target address indicated by the SCI carrying the shared COT indication information is an address associated with the groupcast service, and a responding UE identifier indicated by the shared COT indication information is the same as an identifier of the UE; or determining that the UE is the responding UE of the shared COT, in a case that the service type is a broadcast service, the target address indicated by the SCI carrying the shared COT indication information is an address associated with the broadcast service, and a responding UE identifier indicated by the shared COT indication information is the same as an identifier of the UE.

In some embodiments of the present disclosure, the method further includes: sending, by the UE, the first data packet by using or not using the shared COT.

In some embodiments of the present disclosure, performing by the UE the LBT of the first type includes: performing, by the UE, the LBT of the first type before sending the first data packet.

In a second aspect of the present disclosure provides a communication processing apparatus. The apparatus is applied to a user equipment (UE), and includes: a processing module, configured to perform listen before talk (LBT) of a first type in a case that a first data packet does not meet a condition for using a shared channel occupancy time (COT), in which the first data packet is a data packet obtained through logical channel prioritization (LCP) processing.

In a third aspect of the embodiments of the present disclosure provides a communication device. The communication device includes: a transceiver, a memory, and a processor respectively connected to the transceiver and the memory, in which the processor is configured to control the transceiver to send and receive wireless signals and implement the method in the first aspect of the embodiments of the present disclosure by executing computer executable instructions on the memory.

In a fourth aspect of the embodiments of the present disclosure provides a computer storage medium, in which computer executable instructions are stored on the computer-readable storage medium, and when the computer executable instructions are executed by a processor, a method in the first aspect of the embodiments of the present disclosure is implemented.

The embodiments of the present disclosure provides a communication processing method and apparatus. In a case that a first data packet does not meet a condition for using a shared COT, the UE performs LBT of a first type, in which the first data packet is a data packet obtained through LCP processing. In the embodiments, for SL communication, in a case that a data packet obtained through LCP processing does not meet a condition for using a shared COT, a specific processing solution is provided for a terminal, clarifying a specific processing behavior of the terminal to meet a service requirement.

The additional aspects and advantages of the present disclosure will be partially described below, and some will become apparent from the description below, or will be understood through the practice of the present disclosure.

### BRIEF DESCRIPTION OF THE DRAWINGS

The aforementioned and/or additional aspects and advantages of the present disclosure will become apparent and understandable from description of the embodiments below in conjunction with the accompanying drawings.
FIG. 1 is a diagram illustrating an example architecture of an embodiment of the present disclosure;
FIG. 2 is a flowchart illustrating a communication processing method according to an embodiment of the present disclosure;
FIG. 3 is a flowchart illustrating a communication processing method according to an embodiment of the present disclosure;
FIG. 4 is a flowchart illustrating a communication processing method according to an embodiment of the present disclosure;
FIG. 5 is a block diagram of a communication processing apparatus according to an embodiment of the present disclosure;
FIG. 6 is a block diagram illustrating a communication apparatus provided in an embodiment of the present disclosure;
FIG. 7 is a block diagram of a chip provided in an embodiment of the present disclosure.

### DETAILED DESCRIPTION

The following describes the embodiments of the present disclosure in detail. Examples of the embodiments are shown in the attached drawings, in which the same or similar labels represent the same or similar elements from beginning to end. The embodiments described below with reference to the attached drawings are exemplary and intended to explain the present disclosure, and should not be construed as limitations of the present disclosure. It should be noted that, in the absence of any conflict, the embodiments of the present disclosure and features thereof may be combined with each other.

Terms used herein in embodiments of the present disclosure are only for the purpose of describing specific embodiments, but should not be construed to limit embodiments of the present disclosure. As used in the embodiments of the present disclosure and the appended claims, "a/an", "said" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

For ease of understanding, terms involved in the embodiments of the present disclosure are introduced first.

### 1. Sidelink (SL)

A communication interface between terminals is called a PC-5 interface. On the PC-5 interface, a data transmission link between terminals is called a sidelink. According to a correspondence relationship between a transmitter terminal and a receiver terminal, three transmission modes may be supported on the sidelink, including: unicast, groupcast (also called multicast) and broadcast. The transmitter terminal sends sidelink control information (SCI) on a physical sidelink control channel (PSCCH) and sends a second stage SCI on a physical sidelink shared channel (PSSCH), which carries a resource location for data transmission as well as a source identifier and a destination identifier, etc. For a data packet with hybrid automatic repeat request (HARQ) feedback enabled, the receiver terminal performs HARQ-ACK feedback for a physical sidelink shared channel (PSSCH) on a physical sidelink feedback channel (PSFCH).

There are two ways of allocating transmission resources for sidelink communication. One is a network dynamic scheduling mode (mode 1), and the other is a way that a terminal selects autonomously from a resource pool broadcasted by a network (mode 2). Dynamic scheduling means that the network dynamically allocates transmission resources on the sidelink to the terminal based on cached data reported by the terminal, while autonomous selecting means that the terminal independently and randomly selects the transmission resources from the resource pool configured by the network. The network may configure a plurality of resource pools for the terminal on a bandwidth part (BWP). The specific allocation mode to be used is configured by the network through radio resource control (RRC).

### 2. Listen Before Talk (LBT)

LBT is a technology that avoids a channel access conflict. Different terminals compete to obtain a shared unlicensed spectrum resource through LBT operation. NR-U is a project of 3GPP in the communication protocol release 16 R16), providing a technology necessary for operators to fully integrate unlicensed spectrum into a 5G network. The NR-U supports uplink and downlink operations in an unlicensed frequency band. In the NR-U, channel access for the downlink and channel access for the uplink depend on the LBT feature. A wireless device or a base station must first "sense" a communication channel and detect that there is no communication before any transmission. LBT types include type 1 and type 2. The type 1 is a way that, based on a contention window, a duration of channel monitoring is determined by a random number until the random number equals 0, and access to the channel is granted when the channel is idle. The type 2 is a way of monitoring the channel based on a fixed period, such as 25us, 16us, etc.

### 3. Shared COT (COT sharing)

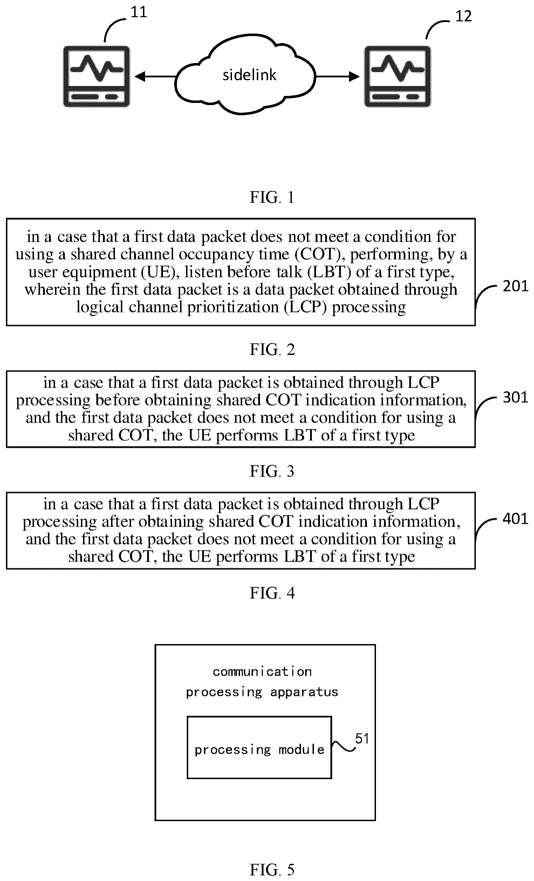

COT sharing is a feature discussed in R18, allowing a type 1 LBT terminal to preempt the COT to be shared with other terminals for use. However, there is a certain requirement for the terminal that may share the COT. As shown in FIG. 1, a terminal that initiates the COT sharing is called a COT initiating UE 11, and a terminal that uses the shared COT is called a responding UE 12.

### 4. Logical Channel Prioritization (LCP)

A multiplexing function of a media access control (MAC) layer at a transmitter combines data of a plurality of logical channels into a transmission channel, that is, a plurality of MAC service data units (SDUs) are multiplexed into a MAC packet data unit (PDU), and then sent through a physical layer channel. In a case that a plurality of logical channels have data to be sent and the total amount of data exceeds the current authorized transmission capacity, the problem of which logical channel should be given priority for transmission arises, which is called LCP. Currently, during a LCP process, when selecting a destination, the following rules need to be followed.

Condition 1: in a case that SL discontinuous reception (DRX) is applicable to a target UE/address, then the sidelink grant is within an activation time of the target UE/address.

Condition 2: the target UE/address has at least one MAC CE or logical channel with the highest priority among all the logical channels and MAC CEs that meet the following conditions:
there is the SL data to be transmitted;
in a case that there is any logical channel with a scheduled frequency band occupied by the channel (SBj), SBj>0;
in a case that the sidelink grant is configured grant type 1, the "sl-configuredGrantType1Allowed" configuration associated with the logical channel allows the MAC SDU of the logical channel to be transmitted over the configured grant type 1;
in a case that a list of available configured grants is configured, the list contains a configured grant identifier associated with the sidelink grant;
in a case that the sidelink grant does not have an associated PSFCH resource, a HARQ attribute of the logical channel is HARQ-disabled.

### 5. Channel Access Priority Class (CAPC)

CAPC is a parameter related to LBT. Different values of the CAPC may affect priorities during contention for a channel. The smaller the value of CAPC, the higher the priority. The UE determines that the CAPC of a MAC PDU follows the following rules:
in a case that an SL MAC PDU only contains an SL MAC CE, a CAPC of the SL MAC PDU is at the highest priority (with the lowest CAPC value);
in a case that the SL MAC PDU contains a sidelink control channel SDU (SCCH SDU), the CAPC of the SL MAC PDU is at the highest priority (with the lowest CAPC value);
in a case that the SL MAC PDU contains an SL MAC SDU, the CAPC of the SL MAC PDU is multiplexed to the lowest priority CAPC (the CAPC is configured per logical channel) associated with a logical channel of a transport block (TB), regardless of whether the SL MAC PDU contains the SL MAC CE.

Currently, the sidelink operates in an unlicensed spectrum (Sidelink-U) scenario. In a case that the UE completes the LCP processing and a corresponding assembled data packet does not meet a condition for using the shared COT, then a specific processing behavior of the UE needs to be determined. However, currently, such a communication processing solution is lacking. Therefore, the embodiments propose a communication processing method and apparatus. In the Sidelink-U scenario, in a case that a data packet obtained through LCP processing does not meet the condition for using a shared COT, a specific processing solution is provided for a terminal, clarifying a specific processing behavior of the terminal to meet a service requirement.

The following provides a detailed introduction to the communication processing method and apparatus provided by the embodiments, in conjunction with the attached figures.

FIG. 2 is a flowchart illustrating a communication processing method according to an embodiment of the present disclosure. The method may be applied to a terminal for execution. The terminal may be referred to as a terminal, a user equipment (UE), a mobile station (MS), a mobile terminal (MT), etc. The terminal may also be a vehicle with a communication capability, an intelligent vehicle, a mobile phone, a wearable device, a tablet computer (Pad), a computer with a wireless transmission function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. The embodiments of the present disclosure do not limit specific technologies and specific device forms adopted by the terminal.

As shown in FIG. 2, the method of the embodiment may include the following step.

Step 201, in a case that a first data packet does not meet a condition for using a shared channel occupancy time (COT), a user equipment (UE) performs listen before talk (LBT) of a first type.

The first data packet is a data packet obtained through logical channel prioritization (LCP) processing.

The LBT of the first type may be referred to as type 1 LBT, in which based on a contention window, a duration of channel monitoring is determined by a random number until the random number equals 0, and the channel is accessed when the channel is idle.

For example, the terminal completes a LCP process and assembles the data packet (the first data packet), but the data packet does not meet the condition for using the shared COT, in this case, the terminal executes type 1 LBT.

In the embodiments, for the Sidelink-U scenario, in a case that a data packet obtained through LCP processing does not meet a condition for using a shared COT, a specific processing solution is provided for a terminal, clarifying a specific processing behavior of the terminal to meet a service requirement.

FIG. 3 is a flowchart illustrating a communication processing method according to an embodiment of the present disclosure. The method may be performed by a UE. As shown in FIG. 3, the method may include the following step.

Step 301, in a case that a first data packet is obtained through LCP processing before shared COT indication information is obtained, and that the first data packet does not meet a condition for using a shared COT, the UE performs LBT of a first type.

For example, the UE has already assembled the data packet before obtaining the shared COT indication information, but the data packet does not meet the condition for using the shared COT, in the case, the UE performs type 1 LBT.

In some examples, the UE may be a responding UE of the shared COT. For instance, the UE determines that it is a responding UE of the shared COT, such as UE 12 as shown in FIG. 1. The UE completes the LCP process before obtaining the shared COT indication information, that is, an SL MAC PDU has been generated, but the SL MAC PDU does not meet the condition for using the shared COT. In the case, the UE performs type 1 LBT.

In some examples, the first data packet not meeting the condition for using the shared COT includes at least one of the followings.
a. A CAPC of the first data packet is greater than a CAPC indicated in the shared COT indication information; b. a target UE receiving the first data packet is not an initiating UE of the shared COT.

For example, in a case that the responding UE is restricted to only use the COT to send sidelink data to the initiating UE of the shared COT, in which the sidelink data may include but is not limited to physical sidelink control channel (PSSCH) data or physical sidelink control channel (PSCCH) data, the data packet assembled by the LCP not meeting the condition for using the shared COT may contain the following situations.

Situation A: a CAPC of the data packet is greater than a CAPC indicated in the shared COT indication information; and/or situation B: a target UE receiving the data packet is not the initiating UE of the shared COT.

For another example, in a case that a responding UE is supported to use the COT to send sidelink data to other terminals other than the initiating UE of the shared COT, such data may include but is not limited to the PSSCH data or the PSCCH data, the data packet assembled by the LCP not meeting the condition for using the shared COT may contain the following situation.

Situation C: a CAPC of the data packet is greater than a CAPC indicated in the shared COT indication information.

In some examples, the UE needs to determine whether it is a responding UE of the shared COT. Correspondingly, the method of this embodiment may also include: determining whether the UE is a responding UE of the shared COT based on a target address and a service type indicated by sidelink control information (SCI) carrying shared COT indication information. In a case that the UE is a responding UE of the shared COT, that is, the UE determines that it is a responding UE of the shared COT, and the UE completes the LCP process before obtaining the shared COT indication information, but the assembled data packet does not meet the condition for using the shared COT, in the case, the UE performs type 1 LBT.

To illustrate the above determination process, in some examples, determining whether the UE is the responding UE of the shared COT based on the target address and the service type indicated by the SCI carrying the shared COT indication information includes: determining that the UE is the responding UE of the shared COT, in a case that the service type is a unicast service, and the target address indicated by the SCI carrying the shared COT indication information is an address of the UE (such as a layer 2 address of the UE, etc.).

For example, there is a unicast link between the UE and the initiating UE of the shared COT. The target address of the data packet (SL MAC PDU) carrying the shared COT indication information is the layer 2 address of the UE. In the case, the UE may determine that it is the responding UE of the shared COT. For instance, in responding to that the unicast service is performed between a UE A and the initiating UE of the shared COT, and that the target address indicated by the SCI carrying the shared COT indication information is a layer 2 address of the UE A, the UE A is determined as the responding UE of the shared COT. Specifically, in response to the UE A determining that a source layer-1 ID carried in the SCI carrying the shared COT indication information is equal to 8 least significant bits (LSBs) of the layer 2 address of the initiating UE of the shared COT, that a destination layer-1 ID carried in the SCI carrying the shared COT indication information is equal to 16 LSBs of the layer 2 address of the UE A, and that a cast type indicated by the SCI carrying the shared COT indication information is unicast, the UE A is determined to be the responding UE of the shared COT.

In some examples, determining whether the UE is the responding UE of the shared COT based on the target address and the service type indicated by the SCI carrying the shared COT indication information also includes: determining that the UE is the responding UE of the shared COT, in a case that the service type is a groupcast service, the target address indicated by the SCI carrying the shared COT indication information is an address associated with the groupcast service (such as a layer 2 address associated with the groupcast service, etc.), and a responding UE identifier indicated by the shared COT indication information is the same as an identifier of the UE.

For example, in responding to that a groupcast service is performed between a UE B and the initiating UE of the shared COT, that the target address indicated by the SCI carrying the shared COT indication information is the layer 2 address associated with the groupcast service, and that the responding UE identifier indicated by the shared COT indication information is the same as an identifier of the UE B, the UE B is determined as the responding UE of the shared COT. Specifically, in a case that the UE B determines that a target layer 1 address carried in the SCI carrying the shared COT indication information is equal to 16 LSBs of an intended receiving target layer 2 address/target layer 1 address, that the cast type indicated by the SCI carrying the shared COT indication information is groupcast, and that the responding UE identifier indicated by the shared COT indication information is the same as the UE B identifier, the UE B is determined to be the target UE of the shared COT.

It should be noted that the above-mentioned intended receiving target layer 2 address may be associated with the groupcast service. The responding UE identifier indicated by the shared COT indication information may be a layer 2 address of the responding UE, an application layer address of the responding UE, or a member identifier (member ID) of the responding UE. The responding UE identifier indicated by the shared COT indication information being the same as the identifier of the UE B means that in a case of the responding UE identifier indicated by the shared COT indication information being the layer 2 address of the responding UE, the layer 2 address of the responding UE may be the same as the layer 2 address of the UE B; or in a case of the responding UE identifier indicated by the shared COT indication information being the application layer address of the responding UE, the application layer address of the responding UE is the same as the application layer address of the UE B; or in a case of the responding UE identifier indicated by the shared COT indication information being the member identifier of the responding UE, the member identifier of the responding UE is the same as the member identifier of the UE B. In some embodiments, the responding UE identifier indicated by the shared COT indication information may have other implementations, which is not specifically limited in this embodiment.

In some embodiments, determining whether the UE is the responding UE of the shared COT based on the target address and the service type indicated by the SCI carrying the shared COT indication information also includes: determining that the UE is the responding UE of the shared COT, in a case that the service type is a broadcast service, the target address indicated by the SCI carrying the shared COT indication information is an address associated with the broadcast service (such as a layer 2 address associated with the broadcast service, etc.), and a responding UE identifier indicated by the shared COT indication information is the same as an identifier of the UE.

For example, in responding to that a broadcast service is performed between a UE C and the initiating UE of the shared COT, that the target address indicated by the SCI carrying the shared COT indication information is the layer 2 address associated with the broadcast service, and that the responding UE identifier indicated by the shared COT indication information is the same as an identifier of the UE C, the UE C is determined as the responding UE of the shared COT. Specifically, in a case that the UE B determines that a target layer 1 address carried in the SCI carrying the shared COT indication information is equal to 16 LSBs of an intended receiving target layer 2 address/target layer 1 address, that the cast type indicated by the SCI is broadcast, and that the responding UE identifier indicated by the shared COT indication information is the same as the identifier of the UE C, then the UE C is determined to be the responding UE of the shared COT.

It should be noted that the above-mentioned intended receiving target layer 2 address may be associated with the broadcast service and the broadcast service may be the one that the UE C is interested in receiving. The responding UE identifier indicated by the shared COT indication information may be a layer 2 address of the responding UE, or an application layer address of the responding UE. The responding UE identifier indicated by the shared COT indication information being the same as the identifier of the UE C means that in a case of the responding UE identifier indicated by the shared COT indication information being the layer 2 address of the responding UE, the layer 2 address of the responding UE may be the same as the layer 2 address of the UE C; or in a case of the responding UE identifier indicated by the shared COT indication information being the application layer address of the responding UE, the application layer address of the responding UE is the same as the application layer address of the UE C. In some embodiments, the responding UE identifier indicated by the shared COT indication information may have other implementations, which is not specifically limited in this embodiment.

In some examples, the method of this embodiment also includes: sending, by the UE, the first data packet by using or not using the shared COT. For example, the first data packet may be sent by using the shared COT, or it may be sent without using the shared COT and instead by using other resources. Optionally, in a case that the UE determines that the first data packet assembled through the LCP does not meet the condition for using the shared COT, it may choose to drop the SL grant or drop the first data packet, etc.

In some examples, the UE performing the LBT of the first type in step 301 includes: the UE performing the LBT of the first type before sending the first data packet. For example, when the UE performs type 1 LBT, it may mean that the UE performs type 1 LBT before sending the first data packet.

In the embodiments, for the Sidelink-U scenario, in a case that the UE completes the LCP process before obtaining the shared COT indication information and the data packet obtained through LCP processing does not meet the condition for using the shared COT, a specific processing solution is provided for a terminal, clarifying a specific processing behavior of the terminal to meet a service requirement.

FIG. 4 is a flowchart illustrating a communication processing method according to an embodiment of the present disclosure. The method may be performed by a UE. As shown in FIG. 4, the method may include the following step.

Step 401, in a case that a first data packet is obtained through LCP processing after obtaining shared COT indication information, and that the first data packet does not meet a condition for using a shared COT, the UE performs LBT of a first type.

For example, the UE assembles the data packet through the LCP process after obtaining the shared COT indication information. In a case that the assembled data packet does not meet the condition for using the shared COT, the UE performs type 1 LBT.

In some examples, the UE may be a responding UE of the shared COT. For instance, the UE determines that it is a responding UE of the shared COT, such as UE 12 as shown in FIG. 1. The UE starts the LCP packet assembly process only after obtaining the shared COT indication information. However, the data packet (SL MAC PDU) assembled during the LCP process does not meet the condition for using the shared COT.

In some examples, after the UE obtains the shared COT indication information, the UE may choose not to use the shared COT based on actual needs, and the UE performs the LBT of the first type.

In some examples, the first data packet not meeting the condition for using the shared COT includes at least one of the following.

c. A CAPC of the first data packet is greater than a CAPC indicated in the shared COT indication information; d. a target UE receiving the first data packet is not the initiating UE of the shared COT.

For example, in a case that the responding UE is restricted to only use the COT to send sidelink data to the initiating UE of the shared COT, in which the sidelink data may include but is not limited to physical sidelink control channel (PSSCH) data or physical sidelink control channel (PSCCH) data, the data packet assembled by the LCP not meeting the condition for using the shared COT may contain the following situations.

Situation D: a CAPC of the data packet is greater than a CAPC indicated in the shared COT indication information; and/or Situation E: a target UE receiving the data packet is not the initiating UE of the shared COT.

For another example, in a case that a responding UE is supported to use the COT to send sidelink data to other terminals other than the initiating UE of the shared COT, such data may include but is not limited to the PSSCH data or the PSCCH data, the data packet assembled by the LCP not meeting the condition for using the shared COT may contain the following situation.

Situation F: a CAPC of the data packet is greater than a CAPC indicated in the shared COT indication information.

In some examples, the method of this embodiment also includes: sending, by the UE, the first data packet by using or not using the shared COT. For example, the first data packet may be sent by using the shared COT, or it may be sent without using the shared COT and instead by using other resources. Optionally, in a case that the UE determines that the first data packet assembled through the LCP does not meet the condition for using the shared COT, it may choose to drop the SL grant or drop the first data packet, etc.

In some examples, the UE performing the LBT of the first type in step 401 includes: the UE performing the LBT of the first type before sending the first data packet. For example, when the UE performs type 1 LBT, it may mean that the UE performs type 1 LBT before sending the first data packet.

It should be noted that for the specific content of the embodiments in FIG. 4, reference may be made to the corresponding description of the embodiments in FIG. 3, which will be not elaborated here.

In this embodiment, for the Sidelink-U scenario, in a case that the UE completes the LCP process after obtaining the shared COT indication information, and the data packet obtained through LCP processing does not meet the condition for using the shared COT or the UE choose not to use the shared COT to send the data packet based on actual needs, the UE performs the type 1 LBT. This embodiment provides a specific processing solution for a terminal, clarifying a specific processing behavior of the terminal to meet a service requirement.

In the above embodiments of the present disclosure, the methods provided by the embodiments of the present disclosure are introduced from the perspective of UE. In order to implement the various functions in the methods provided by the embodiments of the present disclosure, the UE may include a hardware structure or a software module, and implement the above various functions in the form of a hardware structure, a software module, or a hardware structure plus a software module. Any of the above functions may be implemented in the form of a hardware structure, a software module, or a hardware structure plus a software module.

Corresponding to the communication processing method provided by the above embodiments, the present disclosure also provides a communication processing apparatus. Since the communication processing apparatus provided by the embodiments of the present disclosure corresponds to the communication processing method provided by the above embodiments, the implementation methods of the communication processing method may also be applied to the communication processing apparatus provided by the embodiments. Therefore, in this embodiment, no detailed description will be given.

FIG. 5 is a block diagram of a communication processing apparatus according to an embodiment of the present disclosure. The communication processing apparatus may be applied to a user equipment (UE).

As shown in FIG. 5, the apparatus may include: a processing module 51, configured to perform listen before talk (LBT) of a first type in a case that a first data packet does not meet a condition for using a shared channel occupancy time (COT), in which the first data packet is a data packet obtained through logical channel prioritization (LCP) processing.

In some embodiments, the UE is a responding UE of the shared COT.

In some embodiments, the first data packet not meeting the condition for using the shared COT includes at least one of:
a channel access priority class (CAPC) of the first data packet being greater than a CAPC indicated by shared COT indication information; or a target UE for receiving the first data packet being not an initiating UE of the shared COT.

In some embodiments, the processing module 51 is also configured to determine whether the UE is a responding UE of the shared COT based on a target address and a service type indicated by sidelink control information (SCI) carrying shared COT indication information.

In some embodiments, the processing module 51 is further configured to determine that the UE is the responding UE of the shared COT, in a case that the service type is a unicast service, and the target address indicated by the SCI carrying the shared COT indication information is an address of the UE; or determine that the UE is the responding UE of the shared COT, in a case that the service type is a groupcast service, the target address indicated by the SCI carrying the shared COT indication information is an address associated with the groupcast service, and a responding UE identifier indicated by the shared COT indication information is the same as an identifier of the UE; or determine that the UE is the responding UE of the shared COT, in a case that the service type is a broadcast service, the target address indicated by the SCI carrying the shared COT indication information is an address associated with the broadcast service, and a responding UE identifier indicated by the shared COT indication information is the same as an identifier of the UE.

In some embodiments, the processing module 51 is also configured to send the first data packet by using not using the shared COT.

In some embodiments, the processing module 51 is further configured to perform, by the UE, the LBT of the first type before sending the first data packet.

In the embodiments, for the Sidelink-U scenario, in a case that a data packet obtained through LCP processing does not meet a condition for using a shared COT, a specific processing solution is provided for a terminal, clarifying a specific processing behavior of the terminal to meet a service requirement.

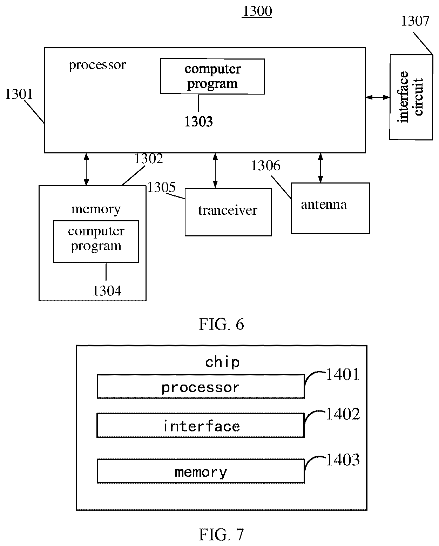

As illustrated in FIG. 6, which is a diagram illustrating a structure of a communication apparatus 1300 provided in an embodiment of the present disclosure. The communication apparatus 1300 may be a network device, a terminal, a chip, a system on chip or a processor that supports the network device to implement the method, or a chip, a system on chip or a processor that supports the terminal to implement the method. The apparatus may be configured to implement the method described in the method embodiments. For details, please refer to the above method embodiments.

The communication apparatus 1300 may include one or more processors 1301. The processor 1301 may include a general purpose processor or a dedicated processor. For example, the processor 1301 may be a baseband processor or a central processor. The baseband processor may be configured to process a communication protocol and communication data, and the central processor may be configured to control a communication apparatus (e.g., a base station, a baseband chip, a terminal, a terminal chip, a DU or CU, etc.), to execute a computer program, and process data of the computer program.

Optionally, the communication apparatus 1300 may further include one or more memories 1302 with a computer program 1304 stored thereon. The processor 1301 executes the computer program 1304 so that the communication apparatus 1300 performs the method as described in the above method embodiments. Optionally, the memory 1302 may further store data. The communication apparatus 1300 and the memory 1302 may be independently configured or integrated together.

Optionally, the communication apparatus 1300 may further include a transceiver 1305 and an antenna 1306. The transceiver 1305 may be referred to as a transceiving unit, a transceiver or a transceiving circuit, which may be configured to achieve a transceiving function. The transceiver 1305 may include a receiver and a transmitter. The receiver may be referred to as a receiver or a receiving circuit, etc., for implementing a receiving function; the transmitter may be referred to as a transmitter or a transmission circuit, etc. for implementing a transmission function.

Optionally, the communication apparatus 1300 may further include one or more interface circuits 1307. The interface circuit 1307is configured to receive code instructions and transmit the code instructions to the processor 1301. The processor 1301 runs the code instructions so that the communication apparatus 1300 performs the method as described in the above method embodiments.

In an implementation, the processor 1301 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1301 may be stored with a computer program 1303. The computer program 1303 runs on the processor 1301 so that the communication apparatus 1300 performs the method as described in the above method embodiments. The computer program 1303 may be solidified in the processor 1301, in which case the processor 1301 may be implemented by hardware.

In an implementation, the communication apparatus 1300 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may also be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs), etc.

The communication apparatus described in the above embodiments may be a network device or a terminal, but the scope of the communication apparatus described in the present disclosure is not limited thereto, and a structure of the communication apparatus may not be subject to FIG. 6. The communication apparatus may be a stand-alone device or may be a part of a larger device. For example, the communication apparatus may be:
(1) a stand-alone integrated circuit (IC), or a chip, or a system on chip or a subsystem;
(2) a set of one or more ICs, which, optionally, may also include a storage component configured to store data and a computer program;
(3) an ASIC, such as a Modem;
(4) a module that may be embedded within other devices;
(5) a receiver, a terminal, a smart terminal, a cellular phone, a wireless device, a handset, a mobile unit, an in-vehicle device, a network device, a cloud device, an artificial intelligence device, etc.; and
(6) others, and so forth.

For the case that the communication apparatus may be a chip or a system on chip, please refer to a diagram of a structure of a chip as illustrated in FIG. 7. The chip illustrated in FIG. 7 may include a processor 1401 and an interface 1402. There may be one or more processors 1401, and there may be a plurality of interfaces 1402.

Optionally, the chip further includes a memory 1403. The memory 1403 is configured to save a necessary computer program and data.

Those skilled in the related art may understand that various illustrative logical blocks and steps listed in embodiments of the present disclosure, may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of embodiments of the present disclosure.

A readable storage medium with instructions stored thereon is further provided in the disclosure. When the instructions are executed by a computer, the steps in the any one of the above method embodiments are implemented.

A computer program product is further provided. The computer program product implements functions of the any of the above method embodiments when executed by a processor.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another in a wire (e.g., a coaxial cable, an optical fiber, a digital subscriber line (DSL)) or wireless (e.g., infrared, wireless, microwave) manner. The computer-readable storage medium may be any available medium that may be accessed by a computer or a data storage device, such as a server and a data center, that integrates one or more available media. The available media may be magnetic media (e.g., floppy disks, hard disks, magnetic tapes), optical media (e.g., high-density digital video discs (DVDs)), or semiconductor media (e.g., solid state disks, SSD)) etc.

Those skilled in the art may understand that various numbers such as first and second involved in the disclosure are distinguished merely for convenience of description, and are not intended to limit the scope of the embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

As used herein, terms "machine-readable medium" and "computer-readable medium" refer to any computer program product, device and/or apparatus configured to provide machine instructions and/or data to a programmable processor (for example, a magnetic disk, an optical disk, a memory and a programmable logic device (PLD)), and includes machine-readable media that receive machine instructions as machine-readable signals. The term "machine-readable signals" refers to any signal used to provide machine instructions and/or data to a programmable processor.

The systems and technologies described herein may be implemented in a computing system that includes back-end components (for example, as a data server), a computing system that includes middleware components (for example, an application server), or a computing system that includes front-end components (for example, a user computer with a graphical user interface or a web browser, through which the user may interact with the implementation of the systems and technologies described herein), or a computing system including any combination of the back-end components, the middleware components or the front-end components. The components of the system may be interconnected by digital data communication (e.g., a communication network) in any form or medium. Examples of the communication network include: a local area network (LAN), a wide area network (WAN), and the Internet.

Computer systems may include a client and a server. The client and server are generally remote from each other and typically interact through the communication network. A client-server relationship is generated by computer programs running on respective computers and having a client-server relationship with each other.

It should be understood that various forms of the processes shown above may be used to re-arrange, add or delete steps. For example, the steps described in the present disclosure may be executed concurrently, sequentially, or in different orders, as long as the desired result of the technical solution of the present disclosure may be achieved, and this is not limited herein.

Furthermore, it should be understood that the various embodiments described in the present disclosure may be implemented independently, or may be combined with other embodiments as permitted by the scheme.

Those skilled in the related art may realize that the units and algorithm steps of each example described in conjunction with the embodiments disclosed herein can be implemented in electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered beyond the scope of the present disclosure.

Those skilled in the art may clearly understand that for specific working processes of systems, apparatuses and units described above reference may be made to corresponding processes in the above method embodiments, and details will not be repeated here.

The above are only implementations of the disclosure, but the protection scope of the disclosure is not limited thereto. Any changes or substitutions that may be easily considered by those skilled in the art within the scope of the present disclosure should be covered by the scope of protection of the disclosure. Therefore, the protection scope of the present disclosure should be subject to the protection scope of claims.

## Claims

1. A communication processing method, comprising:
in a case that a first data packet does not meet a condition for using a shared channel occupancy time (COT), performing, by a user equipment (UE), listen before talk (LBT) of a first type, wherein the first data packet is a data packet obtained through logical channel prioritization (LCP) processing.

2. The method according to claim 1, further comprising: the UE is a responding UE of the shared COT.

3. The method according to claims 1 or 2, wherein the first data packet not meeting the condition for using the shared COT comprises at least one of:
a channel access priority class (CAPC) of the first data packet being greater than a CAPC indicated by shared COT indication information; or
a target UE for receiving the first data packet being not an initiating UE of the shared COT.

4. The method according to any one of claims 1-3, further comprising:
determining whether the UE is a responding UE of the shared COT based on a target address and a service type indicated by sidelink control information (SCI) carrying shared COT indication information.

5. The method according to claim 4, wherein determining whether the UE is the responding UE of the shared COT based on the target address and the service type indicated by the SCI carrying the shared COT indication information comprises:
determining that the UE is the responding UE of the shared COT, in a case that the service type is a unicast service, and the target address indicated by the SCI carrying the shared COT indication information is an address of the UE;
or
determining that the UE is the responding UE of the shared COT, in a case that the service type is a groupcast service, the target address indicated by the SCI carrying the shared COT indication information is an address associated with the groupcast service, and a responding UE identifier indicated by the shared COT indication information is the same as an identifier of the UE;
or
determining that the UE is the responding UE of the shared COT, in a case that the service type is a broadcast service, the target address indicated by the SCI carrying the shared COT indication information is an address associated with the broadcast service, and a responding UE identifier indicated by the shared COT indication information is the same as an identifier of the UE.

6. The method according to any one of claims 1-5, further comprising:
sending, by the UE, the first data packet by using or not using the shared COT.

7. The method according to any one of claims 1-6, wherein performing by the UE the LBT of the first type comprises:
performing, by the UE, the LBT of the first type before sending the first data packet.

8. A communication processing apparatus, comprising:
a processing module, configured to perform listen before talk (LBT) of a first type in a case that a first data packet does not meet a condition for using a shared channel occupancy time (COT), wherein the first data packet is a data packet obtained through logical channel prioritization (LCP) processing.

9. A communication device, comprising: a transceiver, a memory, and a processor respectively connected to the transceiver and the memory, wherein the processor is configured to control the transceiver to send and receive wireless signals and implement the method according to any one of claims 1 to 7 by executing computer executable instructions on the memory.

10. A computer storage medium, wherein computer executable instructions are stored on the computer-readable storage medium, and when the computer executable instructions are executed, a method according to any one of claims 1 to 7 is implemented.
